# FASCICULE DE BREVET EUROPEEN

(11) **EP 0 918 606 B1**
(45) Date de publication et mention de la délivrance du brevet: **07.11.2001**
(21) Numéro de dépôt: 97934606.1
(22) Date de dépôt: 22.07.1997
(51) Int. Cl.: B29B 17/02, B03B 5/28

(54) **PROCEDE ET INSTALLATION POUR SEPARER DES MATERIAUX POLYMERES**
VERFAHREN UND VORRICHTUNG ZUM TRENNEN VON POLYMERMATERIALIEN
METHOD AND APPARATUS FOR SEPARATING POLYMERIC MATERIALS

(30) Priorité: 22.07.1996 FR 9609486
(43) Date de publication de la demande: 02.06.1999
(73) Titulaire: Galloo Plastics (S.A.), 59250 Halluin (FR)
(72) Inventeur: VANDEPUTTE, Antoine, B-8930 Menen (BE)
(74) Mandataire: Tilloy, Anne-Marie
(86) Numéro de dépôt international: FR9701355
(87) Numéro de publication internationale: WO9803318

(56) Documents cités:
- EP-A- 0 568 710
- WO-A-92/22380
- DE-A- 4 329 270
- FR-A- 2 281 166
- FR-A- 2 310 160
- FR-A- 2 341 419
- KUNSTSTOFFE, vol. 80, no. 4, 1 Avril 1990, pages 493-495, XP000173800 RESCH M ET AL: "VERMISCHTE UND VERSCHMUTZTE ALTKUNSTSTOFFE STOFFLICH VERWERTEN" cité dans la demande
- KUNSTSTOFFBERATER, vol. 38, no. 6, 1 Juin 1993, pages 26-30, XP000382027 DREIRINGER G ET AL: "WIEDERAUFBEREITUNGS-ANLAGE FUER PVC-FOLIEN" cité dans la demande
- DATABASE WPI Section Ch, Week 7618 Derwent Publications Ltd., London, GB; Class A13, AN 76-32749X XP002028509 & JP 51 030 880 A (MITSUI METAL MINING) , 17 Mars 1976

## Description

La présente invention concerne un procédé destiné à séparer des matériaux polymères provenant de déchets.

L'invention concerne en outre une installation destinée à mettre en oeuvre le procédé pour séparer des matériaux polymères.

L'industrie du recyclage s'intéresse à la récupération sélective de matériaux polymères par exemple tels que le polyéthylène (PE), le polypropylène (PP), l'acrylonitrile-butadiène-styrène (ABS), le polystyrène (PS), le polychlorure de vinyle (PVC), les polyuréthannes (PU), et d'autres encore. L'invention concerne un procédé par étapes et une installation correspondante qui assurent la valorisation de matériaux polymères usagés provenant de tous types de déchets et plus particulièrement de véhicules automobiles. Il s'agit dès lors de réaliser une séparation très sélective de mélanges de matériaux polymères selon leurs composants, et aussi la transformation de ces derniers en matériaux que l'on peut réutiliser ou réintroduire dans un nouveau cycle de fabrication.

### Etat de la technique

Le triage des matériaux polymères peut être réalisé de plusieurs façons. Il existe le tri manuel, le tri après broyage cryogénique, le tri avec les procédés électrostatiques, le tri par analyse infrarouge ou par rayonnement laser, le tri par densité, le tri selon la couleur et selon les formes. On s'intéresse ici plus particulièrement au tri de grandes quantités de matériaux polymères de différentes natures.

On connaît d'après le DE-A-43 29 270 une installation pour assurer le recyclage de matériaux polymère comprenant notamment un broyeur, un bassin d'entraînement pour éliminer les matériaux les plus lourds, un séparateur par flux d'air pour séparer les polymères sous forme de feuilles, puis des séparateurs par densité. D'une part, dans le bassin d'entraînement, des matériaux polymères de densité supérieure à 1 peuvent être éliminés malgré leurs avantages et d'autre part, il n'y a aucun nettoyeur de matériaux polymères. Ce nettoyeur s'avère indispensable dans le cas de déchets provenant de décharges publiques ou de casses automobiles.

Le US-A-4 728 045 décrit un procédé de récupération des matériaux synthétiques provenant de bouteilles en matériaux polymères. Sont réalisés successivement un broyage, une séparation par flux d'air pour éliminer les matériaux légers tel le papier et le PP sous forme de film, deux séparations par flottation en milieu à densité précise pour séparer le PE du polyéthylène-téréphtalate (PET) et une nouvelle séparation aérodynamique. Ce procédé n'est applicable qu'aux bouteilles en matériaux polymères dont la composition en matériaux polymères est déterminée au départ de façon précise.

On connaît d'après le WO-A-92 22 380 un procédé pour séparer des matériaux polymères provenant de récipients. Ce procédé comprend une étape de broyage, une étape de séparation par flux d'air, une étape de nettoyage des matériaux, plusieurs étapes de séparation par densité. Ce procédé n'est applicable qu'à un type de substrat de départ dont la composition en matériaux polymères est connue de manière précise.

Le document Kunststoffberater, 38, Juin 1993, N° 6, pages 26 à 30, décrit une installation comprenant un broyeur, un laveur et des séparateurs par densité. Le laveur possède un dispositif à tambour rotatif. Mais, le substrat au départ contient de 95 à 100 % de PVC et de 0 à 5 % d'impuretés. Cette installation n'est orientée que pour la séparation des PVC.

Le document Kunststoffe 80 Avril 1990, N° 4, pages 493 à 495, décrit une installation pour séparer des matériaux polymères sensiblement identique à la précédente comprenant un broyeur, un dispositif de nettoyage sous la forme d'un tambour rotatif avec des buses et des séparateurs par densité.

On connaît d'après le FR-A-2 599 279 un procédé pour séparer des matériaux polymères. Après broyage et lavage, il y a centrifugation dans un hydrocyclone, puis tri grâce à un crible à secousse.

Le AT-363 051 présente un procédé pour récupérer des matériaux synthétiques qui consiste en un broyage, une première flottation, un lavage et à nouveau un broyage suivi directement d'une seconde flottation. Ces procédés donnent des résultats insuffisants en terme de qualité des matériaux polymères obtenus après séparation.

Mais aucun de ces procédés cités ne donnent de résultats satisfaisants. Ils sont lents ou nécessitent au départ un investissement très important. Ils sont également inapplicables au triage à débit important et ne sont donc pas directement adaptables à l'échelle industrielle.

Ainsi, il apparaît qu'aucun processus de séparation de l'art antérieur n'est utilisable pour le triage de mélanges d'une large variété de matériaux polymères provenant du broyage de véhicules automobiles ou d'autres sources de déchets.

### Exposé de l'invention

Le problème posé est de réaliser un procédé et une installation correspondante de séparation de mélanges complexes de matériaux polymères de tous types, efficace à l'échelle industrielle, et qui donne un degré de pureté des matériaux polymères voisin du degré de pureté des matériaux polymères de première fusion.

Le but de l'invention est de pallier le manque d'efficacité des techniques existantes, en utilisant et en plaçant de façon adéquate une nouvelle phase de séparation mécanique supplémentaire dans une succession d'étapes de nettoyage et de séparations par densité.

Suivant un premier aspect, l'invention propose un procédé pour séparer des matériaux polymères provenant de déchets comprenant une étape de broyage, ainsi que les quatre étapes suivantes pouvant être mises en oeuvre selon un ordre quelconque : une étape de séparation mécanique par facteur de forme, une étape de nettoyage, et au moins deux étapes de séparation par densité.

Ces quatre dernières étapes peuvent être organisées selon 24 possibilités différentes. On peut commencer par une étape de séparation mécanique par facteur de forme, suivie selon un ordre quelconque des autres étapes prévues. Ou bien, le procédé peut également commencer par une étape de séparation par densité, suivie selon un ordre quelconque des autres étapes prévues.

De préférence, une étape de séparation mécanique par facteur de forme est suivie d'une première étape de séparation par densité, puis d'une étape de nettoyage des matériaux polymères et d'une deuxième étape de séparation par densité. L'on propose également, une étape de séparation mécanique par facteur de forme suivie d'une première étape de séparation par densité, puis d'une deuxième étape de séparation par densité et d'une étape de nettoyage des matériaux polymères. Ou encore, une étape de séparation mécanique par facteur de forme est suivie d'une étape de nettoyage des matériaux polymères, puis d'une première étape de séparation par densité et d'une deuxième séparation par densité. Ou bien, une première étape de séparation par densité est suivie d'une étape de séparation mécanique par facteur de forme, puis d'une étape de nettoyage des matériaux polymères et d'une deuxième étape de séparation par densité. Ou encore, une première étape de séparation par densité est suivie d'une étape de séparation mécanique par facteur de forme, puis d'une deuxième étape de séparation par densité et d'une étape de nettoyage des matériaux polymères. Mais également, une première étape de séparation par densité est suivie d'une étape de nettoyage des matériaux polymères, puis d'une séparation mécanique par facteur de forme et d'une deuxième séparation par densité.

L'étape de séparation mécanique par facteur de forme se fait notamment grâce à des moyens de criblage comprenant une grille calibrée qui permettent l'élimination de toutes les matières de taille trop importante.

Toutes les étapes de séparation par densité se font de préférence par une opération de flottation en milieu liquide. Les matériaux polymères mélangés sont plongés dans un bain. On contrôle et on ajuste la densité du bain, ce qui permet de séparer un matériau qui va surnager, à densité inférieure à celle du milieu liquide, d'un autre matériau qui va couler, à densité supérieure à celle du milieu liquide. On récupère les matériaux intéressant que l'on soumet ensuite à de nouveaux traitements. Les séparations par densité peuvent se faire également grâce à un dispositif mécanique comprenant une table densimétrique.

L'étape de nettoyage des matériaux polymères permet à ceux-ci de retrouver une surface identique à la surface de matériaux de première fusion, c'est à dire une surface exempt de couches altérées, de peinture, de graisse... Le nettoyage est réalisé en milieu liquide, de préférence sous agitation énergique, à température élevée, en milieu liquide à compositions précises.

Dans le procédé, les étapes de séparation permettent de séparer d'une part des matériaux polymères ayant une densité inférieure à 1, notamment des polyoléfines, et plus particulièrement du PP et du PE et d'autre part des matériaux polymères ayant une densité supérieure à 1, notamment des styréniques, et plus particulièrement du PS et des ABS.

Pour affiner encore la séparation, éliminer le maximum d'impuretés de toutes tailles et de tout matériaux, et pour obtenir un procédé optimisé, on peut intercaler d'autres étapes de purifications supplémentaires parmi les principales étapes. Une étape de mouillage, de broyage, une étape de séparation à flux d'air pour éliminer les particules les plus légères, une étape de tri électrostatique, une étape de tri optique, une étape de séparation par densité grâce à un dispositif mécanique, une étape de rinçage et d'égouttage, une étape de centrifugation pour éliminer tout liquide, une étape de séchage et une étape de stockage en silo sont placées de façon adéquate dans la chaîne.

Pour obtenir des matériaux séparés de meilleure qualité et de façon à améliorer leurs propriétés mécaniques respectives, on centrifuge et on sèche si les polymères sont humides , puis on homogénéise, on extrude, on centrifuge, on calibre, on homogénéise à nouveau et finalement on ensache les matériaux polymères purifiés obtenus.

Grâce à l'invention, la succession précise de chacune des étapes de séparation permet d'obtenir à la fin du procédé des matériaux polymères extrêmement purifiés.

Selon un second aspect, l'invention propose une installation destinée à la mise en oeuvre du procédé selon le premier aspect de l'invention, comportant un dispositif de broyage, au moins deux dispositifs de séparation par densité, un dispositif de séparation mécanique par facteur de forme, un dispositif de nettoyage.

Ces dispositifs se succèdent dans l'installation selon l'ordre préférentiel donné par le procédé de séparation. Les dispositifs qui précèdent alimentent les dispositifs suivants.

### Description détaillée de l'invention

D'autres avantages du procédé et de l'installation selon l'invention apparaîtront à la lecture de l'exemple de réalisation détaillé de l'invention, en se référant aux dessins donnés à titre d'illustration, dans lequel :

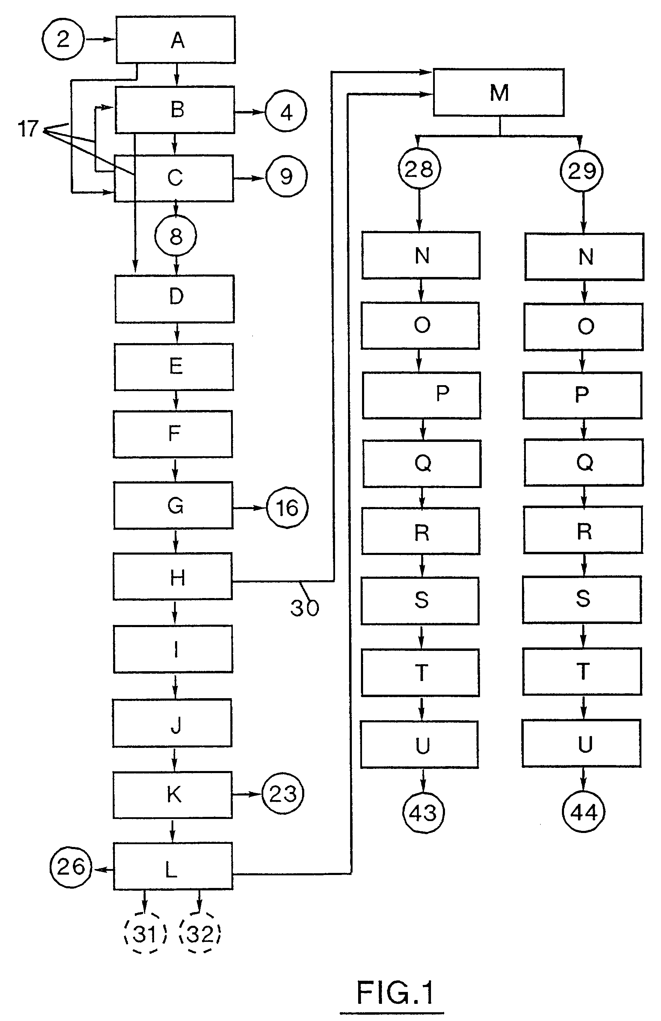

- la figure 1 représente un organigramme du procédé de l'invention comprenant une première et une deuxième partie correspondant respectivement à une première et à une deuxième partie de l'installation ;

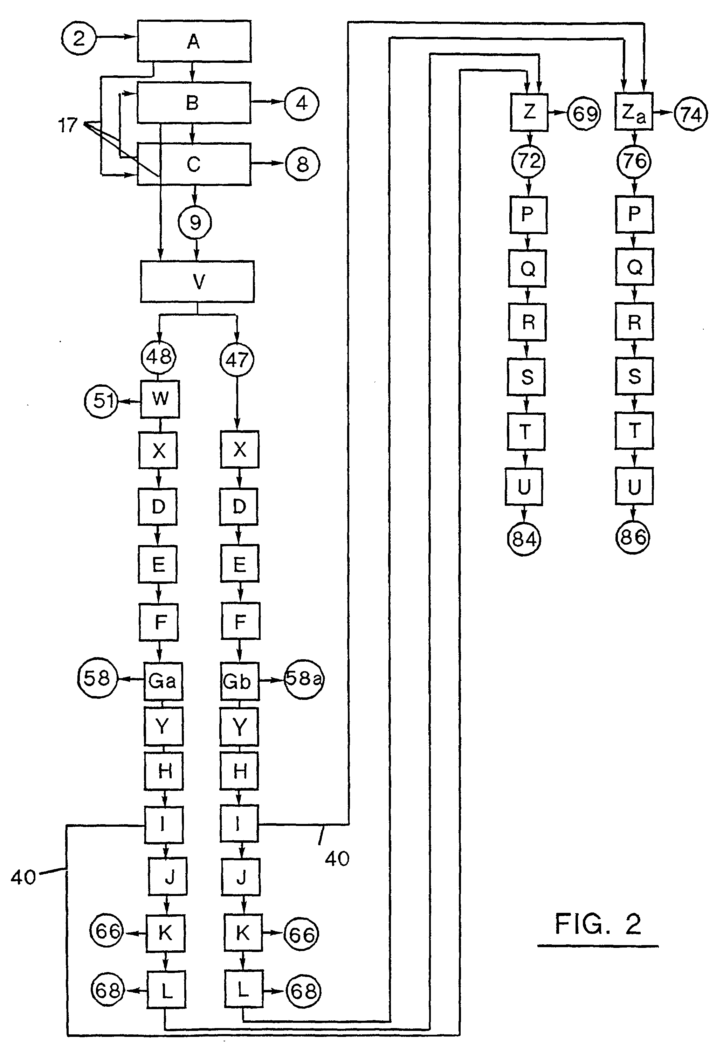

- la figure 2 représente un organigramme du procédé de l'invention comprenant une première et une troisième partie correspondant respectivement à une première et à une troisième partie de l'installation ;

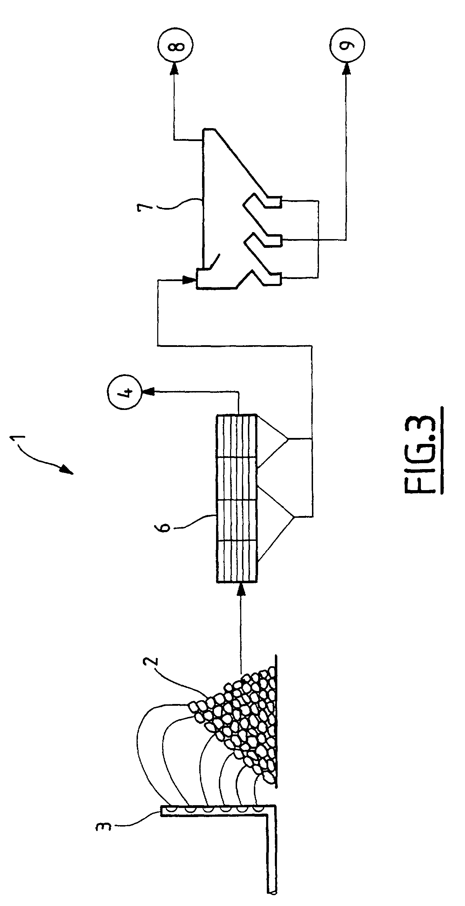

- la figure 3 représente une première partie de l'installation mettant en oeuvre le procédé de l'invention ;
- la figure 4 représente une deuxième partie de l'installation mettant en oeuvre le procédé de l'invention, plus particulièrement destinée à la séparation de matériaux polymères de densité inférieure à 1 ;
- la figure 5 représente une troisième partie de l'installation mettant en oeuvre le procédé de l'invention, plus particulièrement destinée à la séparation de matériaux polymères de densité supérieure à 1.

Pour une voiture, un camion, ou un autobus, on élimine les fluides, on écrase, puis on broie. Tous les morceaux métalliques libres sont séparés des parties non métalliques par des techniques habituelles. Par criblage, on élimine les matières minérales, le verre et la terre. On récupère ensuite un important gisement 2 de matériaux polymères de densité inférieure par exemple à 1,25. Ces matériaux polymères sont broyés entre 8 et 100 mm, de préférence à 25 mm. En cas de besoin, on refait un broyage à 25 mm, et on refait une opération de présélection pour éliminer tout ce qui a une densité supérieure à 1,25.

C'est à ce stade que commencent les étapes de recyclage des matériaux polymères. Il reste des morceaux de bois, de la terre adhérant aux matériaux polymères, des goudrons, du papier... Dans toute l'installation 1 qui va être décrite ci-dessous, des bandes de convoyage, des systèmes à vis, des transports pneumatiques, représentés uniquement sous la forme de flèches à pointe noircie, permettent de transporter de manière continue et à grande vitesse les matières d'un dispositif à l'autre. Toutes les étapes de A à Z et leurs dispositifs correspondants fonctionnent en continu, ou également par fournée selon le débit respectif de chacun des dispositifs. La suite des étapes donnée ci-après a donné des résultats particulièrement intéressants.

Tout d'abord, dans une première partie de l'installation 1, on va densifier du bois présent parmi le matériau polymère, afin de lui donner une densité supérieure à 1, pour l'éliminer ensuite par une séparation selon le critère de la densité. Pour cela, on réalise un mouillage A par un dispositif 3 qui asperge de l'eau sur le tas de déchets 2. On peut également procéder par immersion des déchets ou bien faire mécaniquement un défibrage du bois, par trituration, par exemple à l'aide d'une turbine. On peut utiliser pour le trempage une solution alcaline à base de KOH ou de NaOH qui a pour but de commencer une hydrolyse des fibres de cellulose du bois. L'objectif est de déstructurer cette matière afin de lui donner une densité supérieure à 1.

On élimine ensuite les parties 4 telles que les mousses, les PU alvéolaires, les caoutchoucs alvéolaires, les textiles, les fils, le PS expansé, les déchets de film en matériaux polymères, le bois par une sélection mécanique B. Cette opération est une séparation par facteur de forme. Un dispositif de criblage permet de réaliser ce tri. Il comprend par exemple un tambour 6 rotatif ayant une grille calibrée dont la maille a une taille par exemple de 10 mm de large sur 25 cm de long. On retient en vue de l'élimination tout ce qui n'a pas une forme de plaquette, donc tout ce qui n'a pas été correctement déchiqueté lors d'un broyage précédent. On poursuit le traitement avec toutes les matières qui passent au travers de ce trieur 6.

Puis, on réalise une première opération de séparation par densité C avec flottation dans un séparateur hydraulique 7. La densité choisie est sensiblement égale à 1, le milieu de flottation étant de l'eau.

Sont récupérés et traités dans une deuxième partie de l'installation 1 qui va être décrite ci-dessous, les flottants 8 et les polymères non chargés en minéraux avec d ≤ 1 notamment du ou des :
- PE (d = 0,92 à 0,95),
- PP (d = 0,9),
- éthylène-vinyl-acétate EVA,
- copolymères éthylène-propylène, propylène-éthylène-propylène-caoutchouc, éthylène-propylène-diène-monomère EPDM,
- mousses de PE, mousses de PP,
- PU mousses (d = 0,02 à 0,035).

Tous les matériaux et polymères non expansés 9 possédant une densité supérieure à 1 vont être dirigés et traités dans une troisième partie de l'installation 1 qui va être décrite en dernier. Il s'agit notamment du ou des :
- PS non chargé (d = 1,05) ;
- ABS non chargé (d = 1,07) ;
- PVC
- polycarbonates PC
- caoutchoucs, sauf caoutchoucs alvéolaires thermodurcissables ;
- polyoléfines chargées avec d>1, PP chargé 20 % talc (d = 1,05) ;
- PU chargés (d = 1,21) ;
- PE chargé ;
- polyesters insaturés (d = 1,10 à 1,3) ;
- polyesters saturés (d ≥ 1,2), chargés ou non chargés en fibres de verre ;
- polyamides, PA₆ (d = 1,13), PA_{6,6} (d = 1,14), PA_{6,10}(d = 1,08), PA₁₁ (d = 1,04), PA₁₂ (d = 1,02), chargés ou non chargés ;
- polyméthacrylate de méthyle PMMA (d = 1,18).

Dans la deuxième partie de l'installation 1, on traite le surnageant qui comprend également des matériaux non désirés tel que du bois, des mousses, des tissus, des fibres et des textiles.

On dirige ainsi ce qui flotte dans un broyeur 11 pour une étape de réduction D. Les grilles ont une taille de 8 à 100 mm avec pour optimum 12 mm. Les opérations B et C précédentes ont pour premier objectif d'éviter de broyer n'importe quelle matière par exemple des clous, des cailloux..., et pour deuxième objectif de réaliser des économies d'énergie en faisant diminuer la quantité de matière à broyer.

On peut également réaliser après ce broyage une étape de mouillage tout à fait identique à l'étape de mouillage A et à ses variantes décrites ci-dessus. L'étape de mouillage A doit précéder le plus près possible une séparation hydraulique.

A ce niveau intervient une étape de nettoyage E intense. Cette opération est capitale car elle permet aux matériaux polymères sous la forme de substrat de retrouver leur surface native. En effet, ceux-ci sont très souvent souillés par des goudrons, de la terre, des résidus de plomb, des huiles, du liquide de refroidissement, de l'acide, du gas-oil, de l'essence. De plus, les surfaces des matériaux polymères sont soit recouvertes de peinture (cas des pare-chocs en PP), soit attaquées par des agents chimiques, soit oxydées, soit altérées par les rayons U.V. ou bien encore vieillies. Tout ces facteurs modifient les tensions superficielles de surface et ne permettent pas la pleine efficacité des séparations ultérieures par flottation. Le traitement pour décaper est nécessaire si l'on veut que les matériaux polymères obtenus en fin de séparation aient les mêmes propriétés physico-chimiques que des matériaux polymères vierges. De ce fait, les morceaux sont introduits dans un ou plusieurs appareils à laver 12 et à triturer. Ces derniers comprennent par exemple une ou plusieurs cuves fixes, des palles rotatives et de puissants moyens moteurs pouvant développer 0,05 à 0,5 kWh par kg de matière à traiter, par exemple de marque Wemco®. On ajoute dans les cuves un milieu liquide composé d'eau, d'un agent de nettoyage et éventuellement d'un agent d'abrasion. L'opération de lavage E est réalisée en milieu le plus concentré possible, à température ambiante ou mieux encore à chaud, l'eau pouvant être amenée à ébullition grâce à la chaleur dissipée par les moteurs.

La composition du milieu de nettoyage peut être :
- mélange de matériaux polymères de 50 à 70 % en poids ;
- phase liquide de 30 à 50 % en poids comprenant :
   - eau 50 à 100 % en poids,
   - agent nettoyant 0 à 20 % en poids, par exemple soude, potasse, carbonate de sodium, savons biodégradables non moussants de marque Akypo MB 2621 S® fournis par la société Chemy,
   - agent mouillant (à base d'alcools gras modifiés par oxyde d'éthylène et/ou oxyde de propylène) ; et
   - agent d'abrasion 0 à 30 % en poids par exemple des minéraux tels que de la poudre de carbonate de calcium, du talc, de la silice, de l'alumine.

A la sortie, les matériaux polymères sont rincés à l'eau et s'égouttent pendant l'étape F, par exemple dans la vis d'extraction 13. L'eau récupérée peut être réinjectée dans l'appareil à laver 12.

Puis intervient une deuxième étape de séparation par densité avec flottation G dans un séparateur 14. Celle-ci se fait en milieu liquide de densité sensiblement égale à 1, le liquide étant de l'eau. La matière qui coule 16, de densité supérieure à 1, est éliminée. Ce tri permet de parfaire la sélection déjà commencée lors de la première séparation par flottation C. Les surfaces des matériaux polymères sont nettoyées lors de l'étape E, ce qui permet de faire plonger les matériaux 16, dont des artefacts leur attribuaient de fausses densités inférieures à 1. On peut réaliser à ce niveau un tri par densité plus fine. Les différentes classes de matériaux polymères sont séparées par cette méthode, si la densité du milieu liquide est ajustée de façon précise. Il y a aussi élimination par coulage des matériaux 16, sables résiduels auparavant collés au PE et au PP et surtout de la plus grosse partie du bois. Cette matière a été véritablement érodée, dilacérée, et imbibée de liquide lors de l'étape de trituration précédente, lui donnant ainsi une densité supérieure à 1.

Le dispositif de triage 6 de l'étape B peut également être placé à d'autres endroits dans la chaîne de valorisation, par exemple après l'étape de flottation C (flèches 17 montrant la succession A, C, B, D).

Ensuite, on réalise pour les matériaux polymères surnageants un rinçage et une centrifugation H dans une centrifugeuse 18 pour éliminer le liquide restant.

Un séchage I en continu est ensuite accompli. Cette opération peut être effectuée avec différents appareils. Par exemple, on peut utiliser un sécheur à lit fluidisé 19, un sécheur flash, un séchage dans un triturateur de type Wemco®, où l'élévation de température est réalisée grâce à l'énergie mécanique d'agitation, un sécheur à contre-courant de type Voom®.

La masse résultante est stockée J dans un silo tampon 21, utile si la chaîne tombe en panne ou en cas d'arrêt pour entretien et maintenance.

A ce niveau est placée une étape, éventuellement facultative, de séparation avec flux d'air K. Cette étape doit être placée après une étape de séchage I. Le séparateur 22 permet l'élimination de toutes les matières légères 23, telles que les poussières restées adhérentes, les petites fibres et mousses ainsi que les fines particules de bois restantes.

Une étape de tri mécanique par densité L permet de parfaire la séparation. Elle se fait de préférence dans un dispositif mécanique 24 de table densimétrique à secousse provenant par exemple de la société Herbold (Allemagne) ou de la société Eldan (Danemark), où est rejetée la charge circulante 26. Toutes les matières légères circulantes 26 restantes, bois, mousses, caoutchouc, et impuretés sont éliminées.

En phase finale de triage, on a placé une dernière étape de séparation par densité M pour séparer deux matériaux particulièrement intéressants et à forte valeur ajoutée parmi les densités inférieures à 1 : ce sont les deux polyoléfines PE et PP. De préférence, on réalise une flottation M, équivalente à la flottation G. La densité du PP est de 0,9 et la densité du PE est de 0,92 à 0,95. La séparation se fait dans un séparateur 27 en milieu liquide de densité réglée de manière très précise, et de ce fait comprise entre 0,9 et 0,95. Le milieu liquide comprend de préférence de l'eau et un alcool choisi parmi le méthanol, l'éthanol, un alcool de vin, un alcool dénaturé, ou de l'alcool à brûler. Le degré du mélange eau-alcool utilisé est compris entre 55 et 60°. Le contrôle est réalisé à l'aide d'un pèse-alcool. Le réglage du degré d'alcool permet d'optimiser la densité du milieu pour obtenir une séparation la plus sélective possible. Le lavage intensif G qui a été réalisé précédemment permet un contact optimal entre la surface native des matériaux polymères à traiter et le milieu à densité choisie. Un agent mouillant est aussi ajouté dans le milieu à raison de 0,1 à 0,2 % en poids. La présence de cet agent mouillant améliore notablement la séparation. De l'Antarox-FM3® de la société Rhône-Poulenc a été préférentiellement utilisé. On comprend mieux l'intérêt des étapes précédentes de centrifugation H et de séchage I afin que la densité du milieu liquide finement réglée dans le séparateur 27 ne soit pas modifiée par un apport d'eau parasite. Le mélange PP-PE introduit est séparé de façon quasi parfaite. La matière surnageante 28, récupérée vers le haut, est composée de PP et la matière qui coule 29, récupérée dans la partie basse, est composée de PE.

Le processus peut s'arrêter à l'étape J de stockage en silo 21, si l'on désire commercialiser uniquement un mélange de polyoléfines. Notons que l'étape M peut directement être mise à la suite de l'étape de centrifugation H dans le cas où l'on a des déchets sans produits légers ; si les étapes I à L sont supprimées, H est suivie de M, avec la flèche 30.

L'étape M peut être supprimée. Le tri mécanique par densité L avec une table à secousse 24 peut servir à séparer les deux matériaux polymères précités selon leur densité qui leur est propre. Le procédé peut s'achever ainsi à ce niveau par l'obtention de PE et de PP purs, respectivement 31 et 32.

Le PP 28, 32 et le PE 29, 31 triés grâce à cette installation peuvent être soit commercialisés en vue d'une utilisation directe, soit immédiatement subir de nouvelles étapes de traitement N à U. On procède notamment à une extrusion qui permet d'obtenir pour les matériaux polymères ainsi traités, des propriétés mécaniques quasi identiques à celles des matériaux polymères vierges.

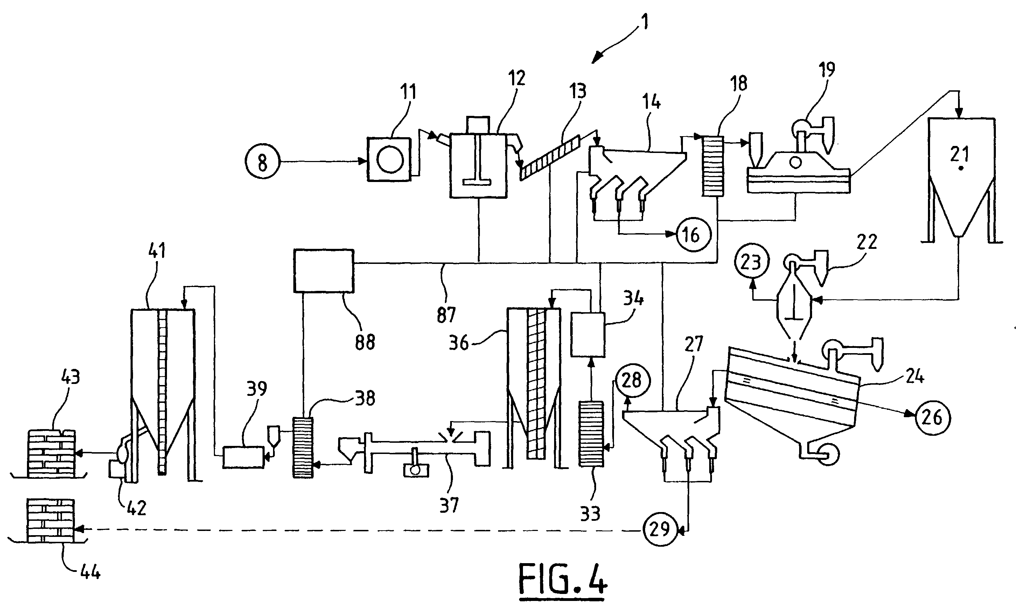

A ce stade, la figure 4 ne représente que l'installation nécessaire au traitement d'un seul matériau le PP 28, étant entendu que l'autre matériau le PE 29 est traité de la même façon, en suivant les mêmes étapes de N à U mises en oeuvre par les mêmes dispositifs (représentation en pointillés dans la figure 4).

Les phases PP 28, 32 et PE 29, 31 sont donc séparément centrifugées N dans une centrifugeuse 33, pour ramener la quantité de liquide à environ 1 à 2 %. Elles sont séchées O dans un sécheur 34, par exemple identique au sécheur utilisé dans l'étape I.

Elles sont homogénéisées P par circulation dans un silo 36 qui sert également au stockage.

Elles sont extrudées Q dans une extrudeuse 37 pour fabriquer des granulats. Il y a encore une filtration de 20 à 300 µm en cours pour éliminer les ultimes impuretés. On peut y voir là un test pour savoir si le produit à extruder est pur. Différents agents peuvent être également introduits : colorants, anti-U.V., etc. Entre le stockage P et l'extrusion Q, on peut éventuellement placer une étape de séparation à flux d'air pour éliminer les fibres et poussières (non représentée).

Les phases PE et PP sont centrifugées R dans une centrifugeuse 38 pour éliminer l'eau de refroidissement des granulés.

Les phases sortant sous forme de granulés sont calibrées S dans un calibreur 39 pour l'élimination des fins et des agglomérats.

Elles sont à nouveau homogénéisées T dans un silo 41 d'homogénéisation et de stockage. En étape finale U, elles sont mises en sacs d'environ 50 l dans une machine à ensacher 42.

Le PP 43 et PE 44 sortent en tant que produits finis d'excellente qualité, et peuvent être utilisés dans les applications habituelles de ces polyoléfines.

Dans une troisième partie de l'installation 1, les polymères de densité supérieure à 1, que l'on désire récupérer dans les résidus de broyage automobile sont notamment des styréniques et plus particulièrement du PS et de l'ABS. Parmi ceux-ci, on trouve également d'autres déchets, des pierres, des clous...

Du séparateur 7, on passe les coulants 9 par une opération de séparation par densité V avec flottation dans un séparateur hydraulique 46. La densité choisie est sensiblement égale à 1,05. Le PS 47 flotte, mais également des polypropylènes chargés talc à 10 - 20 %, du bois, des fibres. L'ABS 48 coule, mais également du polyméthacrylate de méthyle, d'autres polymères, du bois, des mousses denses et tous matériaux jusqu'à une densité de 1,25. Le milieu liquide du séparateur hydraulique contient de l'eau, des agents mouillants, et des composés minéraux tels que des argiles, de la bentonite, ou des composés solubles tels que des sels... , composés utilisés pour augmenter la densité de l'eau. On utilise de préférence de l'argile de carrière. Cette dernière est mise en suspension dans l'eau et on élimine les particules les plus lourdes qui s'accumulent au fond du récipient afin d'obtenir un milieu homogène. On ajuste ensuite la densité en rajoutant de l'eau. Le rôle de l'agent mouillant est également de maintenir en suspension l'argile. L'agent utilisé est du Coatex SP 30 S®.

On va décrire à présent la chaîne de purification de l'ABS 48. On conduit l'ABS et ce qui coule 48 vers une troisième opération de flottation W dans un séparateur hydraulique 49. Celle-ci se fait en milieu liquide de densité sensiblement égale à 1,1. Le liquide a une composition identique à la composition décrite pour le milieu du séparateur 46 de l'étape V, seule la quantité d'argiles par unité de volume est supérieure. La matière qui coule 51 comprend des pierres, de la terre, des polypropylènes chargés 30 - 40 %. A cette densité l'ABS flotte, mais également du bois.

Puis, on rince X en arrosant l'ABS qui flotte dans la vis de transport 52, on l'égoutte et on le centrifuge, pour en éliminer complètement l'argile adhérente.

On dirige ensuite l'ABS dans un broyeur 53 pour une étape de réduction D, identique au broyage D déjà décrit. Les grilles ont une taille de 8 à 100 mm avec pour optimum 12 mm. L'opération W précédente a pour premier objectif d'éviter de broyer n'importe quelle matière par exemple des clous, des cailloux..., et pour deuxième objectif de réaliser des économies d'énergie en faisant diminuer la quantité de matière à broyer.

On peut également réaliser après ce broyage D une étape de mouillage tout à fait identique à l'étape de mouillage A et à ses variantes décrites ci-dessus. L'étape de mouillage A doit précéder le plus près possible une séparation hydraulique.

Puis, à ce niveau intervient une étape de nettoyage E intense pour les matériaux qui flottent 48 (ABS). Cette opération qui permet aux ABS de retrouver leur surface native, est identique à l'opération E déjà décrite ci-dessus, avec l'utilisation d'un ou plusieurs appareils à laver 54 et d'un milieu de nettoyage à composition identique.

A la sortie, les matériaux polymères sont rincés à l'eau et s'égouttent pendant l'étape F, par exemple dans la vis d'extraction 56. L'eau récupérée peut être réinjectée dans l'appareil à laver 54.

Puis intervient une quatrième étape de séparation par densité avec flottation Gₐ dans un séparateur 57. Celle-ci se fait en milieu liquide de densité sensiblement égale à 1,07. Le liquide a une composition identique à la composition décrite pour le milieu du séparateur 46 de l'étape V, seule la quantité d'argiles par unité de volume est supérieure. La matière qui flotte 58 (bois, et autres déchets) est éliminée. A cette densité l'ABS 48 coule. Ce tri permet de parfaire la sélection déjà faite lors de la deuxième séparation par flottation W de la troisième partie de l'installation 1. Les surfaces des matériaux polymères sont nettoyées lors de l'étape E, ce qui permet de faire flotter les matériaux 58, dont des artefacts leur attribuaient de fausses densités supérieures à 1,07.

Ensuite, on réalise un rinçage Y par arrosage des polymères dans la vis de transport 59 pour éliminer toute l'argile, on réalise un égouttage et on réalise une centrifugation H de la matière polymère ABS surnageante dans une centrifugeuse 61 pour éliminer le liquide restant.

Un séchage I en continu est ensuite accompli avec le même 62 ou avec des appareils différents du séchage décrit pour les polyoléfines.

La masse résultante est stockée J dans un silo tampon 63.

A ce niveau est placée une étape, éventuellement facultative, de séparation avec flux d'air K. Cette étape doit être placée après une étape de séchage I. Le séparateur 64 permet l'élimination de toutes les matières légères 66, telles que les poussières restées adhérentes, les petites fibres et mousses ainsi que les fines particules de bois restantes.

Une étape de tri mécanique par densité L permet de parfaire la séparation. Elle se fait de préférence dans un dispositif mécanique 67 de table densimétrique à secousse, décrite plus haut, où est rejetée la charge circulante 68. Toutes les matières légères circulantes 68 restantes, bois, mousses, caoutchouc, et impuretés sont éliminées. Est également éliminé par ce dispositif du PP chargé à 30 % de talc.

On peut également supprimer ce dernier produit parasite 69 en rajoutant une étape Z facultative de tri électrostatique à table électrostatique trieuse 71 par exemple de la société Hamos Recycling Technique (Allemagne).

L'ABS 72 obtenu après L et/ou Z peut être commercialisé directement.

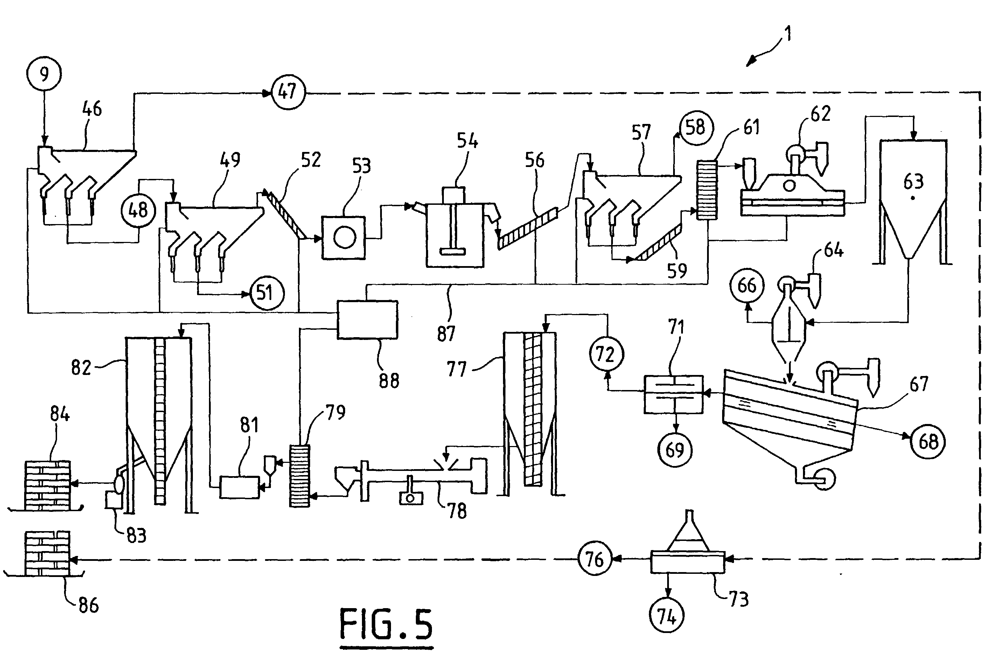

La figure 5 ne représente que l'installation nécessaire au traitement du matériau ABS 48. Or, lors de l'étape V précédente, on a récupéré dans le flottant du PS 47, dont on va décrire à présent la chaîne de purification.

Le PS 47 est traité sensiblement de la même façon, en suivant les mêmes étapes de X, D, E, F, G, Y, H à L mises en oeuvre par les mêmes dispositifs (représentation en pointillés dans la figure 5). Seule l'étape W de séparation par densité et son dispositif 49 correspondant est supprimée. On peut monter une seconde chaîne de dispositifs 52, 53, 54, 56, 57, 59, 61, 62, 63, 64, 67 en parallèle avec la première, ou bien mettre en oeuvre ces étapes par campagne et alternativement stocker les matériaux polymères ABS 48 ou PS 47. Cette dernière solution est avantageuse s'il y a une importante différence dans le débit d'arrivée des matériaux polymères entre ABS 48 et PS 47.

Donc, après broyage D, après nettoyage E, égouttage F, on réalise, pour affiner la purification du PS 47, une étape G_{b} de séparation par densité avec flottation en milieu liquide. La densité est sensiblement égale à 1,05, identique à la densité de l'étape de flottation V. Coulent en 58ₐ pour être éliminés, des matériaux tels que bois, produits mixtes avec métaux,... et, tous produits à densité modifiée par le nettoyage E. Le PS est rincé en Y dans la vis de transport 59, pour éliminer toute l'argile, puis est égoutté.

Les étapes H à L restent identiques à celles décrites. Le PS sortant contient encore des polyoléfines chargées à 20 % maximum avec 1 < d ≤ 1,05. Le plus souvent, du PE et du PP chargés sont de couleur noire. Par contre, du PS est de couleur blanche, surtout lorsqu'il provient de déchets d'appareils électroménagers. On réalise ainsi un tri optique Zₐ dans un banc 73, provenant par exemple de la société Sortex, pour éliminer ces matériaux polymères chargés 74. On peut éventuellement réaliser cette séparation Zₐ par tri électrostatique.

Le PS 76 obtenu après L et/ou Zₐ peut être commercialisé directement.

Dans certains cas particuliers, certaines étapes, parmi les étapes précédentes de la deuxième ou de la troisième partie de l'installation 1, ne sont pas indispensables. Citons par exemple, l'étape D de broyage plus fin. Le processus peut s'arrêter à l'étape J de stockage en silo 63. Notons que les étapes Z et Zₐ peuvent directement être mises à la suite de l'étape de séchage I dans le cas où l'on a des déchets sans produits légers ; si les étapes J à L sont supprimées, I est suivie de Z ou Zₐ, avec la flèche 40.

Les séparateurs hydrauliques 7, 14, 27, 46, 49, 57 utilisés sont dit statiques. Ils peuvent être remplacés par des séparateurs hydrauliques dit dynamiques ou ceux comprenant une pompe et un cyclone pour réaliser un flux de triage circulant. Tous les séparateurs hydrauliques par flottation 7, 14, 27, 46, 49, 57 peuvent être remplacés par des tables de séparation à secousses 24, 67, mais les matériaux que l'on y introduit doivent être secs. Tous les séparateurs hydrauliques par flottation 7, 14, 27, 46, 49, 57 peuvent être également remplacés par des séparateurs électrostatiques, par exemple de la société Hamos Recycling Technique (Allemagne). On peut aussi réaliser ou affiner la purification des fractions PE-PP et PS-ABS grâce à un broyage cryogénique donnant des particules de dimensions différentes selon le matériau polymère. Toutes les possibilités d'utilisation des dispositifs précédemment cités pour réaliser une séparation selon une propriété mécanique ou chimique des matériaux polymères sont ouvertes.

L'ABS 72 et le PS 76 peuvent subir de nouvelles étapes de traitement P à U afin d'améliorer encore leur degré de pureté et leurs propriété mécaniques. De manière analogue aux polyoléfines séparées dans la deuxième partie de l'installation, on procède notamment à une extrusion qui permet d'obtenir pour les matériaux polymères ainsi traités des propriétés physiques quasi identiques à celles de matériaux polymères vierges.

A ce stade, la figure 5 ne représente que l'installation nécessaire au traitement d'un matériau ABS 72, étant entendu que l'autre matériau PS 76 est traité de la même façon, en suivant les mêmes étapes de P à U mises en oeuvre par les mêmes dispositifs (représentation en pointillés dans la figure 5).

Les phases ABS 72 et PS 76 sont donc séparément homogénéisées P par circulation dans un silo 77. Elles sont extrudées Q dans une extrudeuse 78 avec filtration de 20 à 300 µm. Entre le stockage P et l'extrusion Q, on peut éventuellement placer une étape de séparation à flux d'air pour éliminer les fibres et poussières (non représentée). On comprend l'intérêt de toutes les étapes de rinçage précédentes mises en place pour éviter l'introduction d'argile dans l'extrudeuse 78. Les phases ABS et PS sont ensuite séparément centrifugées R dans une centrifugeuse 79. Les phases sortant sous forme de granulés sont calibrées S dans un calibreur 81 pour l'élimination des fins et des agglomérats. Elles sont à nouveau homogénéisées T dans un silo 82. En étape finale U, elles sont mises en sacs d'environ 50 1 dans une machine à ensacher 83.

L'ABS 84 et le PS 86 sortent en tant que produits finis d'excellente qualité, et peuvent être utilisés dans les applications habituelles de ces styréniques.

Tous les dispositifs destinés à la mise en oeuvre des étapes communes D à L, P à U, à la deuxième et à la troisième partie de l'installation 1 peuvent être prévus en un seul exemplaire, le procédé s'effectuant alors par fournées, ou en plusieurs exemplaires, par exemple deux exemplaires de chaque dispositif respectivement dans la deuxième et la troisième partie de l'installation. De ce fait, les paramètres d'optimisation de séparation de ces appareils vont changer (densité, températures d'extrusion, etc.).

### Résultats

Le Tableau 1 donne une évaluation des pourcentages des différents produits, du PP 28 et du PE 29 récupérés avec le procédé et l'installation 1, à partir de 100 % de résidus de broyage automobile (R.B.A.).

**Tableau 1**

| **Produits obtenus** | **% de récupération** |
|---|---|
| Mousses et légers | 19 |
| Mousses et légers | 2 |
| Polymères avec d > 1 | 64 |
| Mélange PP-PE avec d < 1 | 15 (100 %) |
| PP | 67 |
| PE | 33 |

Le Tableau 2 donne les propriétés mécaniques du PE vierge et du PE 29, 44 récupérés avec le procédé et l'installation 1 correspondante, à partir de résidus de broyage automobile.

**Tableau 2**

| **Caractéristiques** | **Unités** | **Vierge** | **R.B.A.** |
|---|---|---|---|
| Melt index M.F.I. 2,16 kg/230°C | g/10 min. | 1,9 | 1,7 |
| Densité | | 0,925 | 0,928 |
| Résistance au seuil d'écoulement 25 mm/s | MPa | 22 | 20,3 |
| Résistance à la rupture | MPa | 18 | 15 |
| Module d'élasticité en flexion | MPa | 700 | 650 |
| Choc IZOD entaillé +23°C | J/m | 160 | 148 |
| Choc IZOD entaillé -18°C | J/m | 60 | 56 |

Le Tableau 3 donne les propriétés mécaniques du PP 28, 43 vierge et du PP récupérés avec le procédé et l'installation 1 correspondante, à partir de résidu de broyage automobile.

**Tableau 3**

| **Caractéristiques** | **Unités** | **Vierge** | **R.B.A.** |
|---|---|---|---|
| Melt index M.F.I. 2,16 kg/230°C | g/10 min. | 4,1 | 4 |
| Densité | | 0,90 | 0,901 |
| Résistance au seuil d'écoulement 25 mm/s | MPa | 29 | 22,5 |
| Résistance à la rupture | MPa | 30 | 20 |
| Allongement à la rupture | % | 500 | 304 |
| Module d'élasticité en flexion | MPa | 1200 | 1000 |
| Choc IZOD entaillé +23°C | J/m | 100 | 170 |
| Choc IZOD entaillé -18°C | J/m | 45 | 55 |

Dans le cas de résidu de broyage automobile, les valeurs obtenues sont le résultat d'une étude faite sur des éprouvettes injectées directement après le tri du PE 28 et du PP 29 (étape M).

On constate d'après ces deux tableaux que la qualité, et donc la valeur commerciale du PE et du PP est sensiblement équivalente à la qualité du PE et du PP de première fusion.

Il en est de même pour les deux matériaux styréniques ABS et PS.

Compte tenu des solvants éventuellement utilisés, l'installation répond aux normes antidéflagrantes et les différents appareils sont le plus étanche possible. Dans toute l'installation industrielle décrite ci-dessus les eaux de lavage et de rinçage, les eaux récupérées après égouttage et centrifugation, les eaux de condensation des sécheurs et les eaux des milieux de flottation soit retournent vers le dispositif utilisateur, soit sont collectées par une canalisation 87 afin que soit assuré leur stockage et leur retraitement dans une station d'épuration 88.

L'invention n'est pas limitée par les détails des modes de réalisation et des exemples choisis pour l'illustrer. Des modifications peuvent être apportées sans pour autant sortir du cadre de l'invention tel que défini par les revendications. Par exemple, les matériaux polymères peuvent provenir également des ordures ménagères, des déchets industriels. Les densités des liquides utilisés dans les dispositifs de séparation par flottation peuvent être modifiées selon la nature des matériaux polymères que l'on désire récupérer et séparer.

## Revendications

1. Procédé pour séparer des matériaux polymères (2) provenant de déchets, comprenant une étape de broyage, ainsi que les quatre étapes suivantes pouvant être mises en oeuvre selon un ordre quelconque :
- une étape de séparation mécanique par facteur de forme (B),
- une étape de nettoyage (E), et
- au moins deux étapes de séparation par densité (C, G, M, V, W).

2. Procédé selon la revendication 1, **caractérisé en ce que** l'on met en oeuvre lesdites étapes en commençant par une étape de séparation mécanique par facteur de forme (B), suivie selon un ordre quelconque d'une étape de nettoyage (E), et d'au moins deux étapes de séparation par densité (C, G, M, V, W).

3. Procédé selon la revendication 1, **caractérisé en ce que** l'on met en oeuvre lesdites étapes en commençant par une étape de séparation par densité (C) , suivie selon un ordre quelconque d'une étape de nettoyage (E), d'une étape de séparation mécanique par facteur de forme (B) et d'au moins une étape de séparation par densité (G, M, V, W).

4. Procédé selon la revendication 1 ou 2, **caractérisé en ce que** l'on met en oeuvre lesdites étapes selon l'ordre suivant : une étape de séparation mécanique par facteur de forme (B) est suivie d'une première étape de séparation par densité (C), puis d'une étape de nettoyage des matériaux polymères (E) et d'une deuxième étape de séparation par densité (G, M, V, W).

5. Procédé selon la revendication 1 ou 2, **caractérisé en ce que** l'on met en oeuvre lesdites étapes selon l'ordre suivant : une étape de séparation mécanique par facteur de forme (B) est suivie d'une première étape de séparation par densité (C) , puis d'une deuxième étape de séparation par densité (G, M, V, W) et d'une étape de nettoyage des matériaux polymères (E).

6. Procédé selon la revendication 1 ou 2, **caractérisé en ce que** l'on met en oeuvre lesdites étapes selon l'ordre suivant : une étape de séparation mécanique par facteur de forme (B) est suivie d'une étape de nettoyage des matériaux polymères (E), puis d'une première étape de séparation par densité (C) et d'une deuxième séparation par densité (G, M, V, W).

7. Procédé selon la revendication 1 ou 3, **caractérisé en ce que** l'on met en oeuvre lesdites étapes selon l'ordre suivant : une première étape de séparation par densité (C) est suivie d'une étape de séparation mécanique par facteur de forme (B), puis d'une étape de nettoyage des matériaux polymères (E) et d'une deuxième étape de séparation par densité (G, M, V, W).

8. Procédé selon la revendication 1 ou 3, **caractérisé en ce que** l'on met en oeuvre lesdites étapes selon l'ordre suivant : une première étape de séparation par densité (C) est suivie d'une étape de séparation mécanique par facteur de forme (B), puis d'une deuxième étape de séparation par densité (G, M, V, W) et d'une étape de nettoyage des matériaux polymères (E).

9. Procédé selon la revendication 1 ou 3, **caractérisé en ce que** l'on met en oeuvre lesdites étapes selon l'ordre suivant : une première étape de séparation par densité (C) est suivie d'une étape de nettoyage des matériaux polymères (E) , puis d'une séparation mécanique par facteur de forme (B) et d'une deuxième séparation par densité (G, M, V, W).

10. Procédé selon l'une des revendications précédentes, **caractérisé en ce que** l'étape de séparation mécanique par facteur de forme (B) se fait grâce à des moyens de criblage (6) qui permettent l'élimination de toutes les matières (4) de taille trop importante.

11. Procédé selon la revendication 10, **caractérisé en ce que** les moyens de criblage (6) comprennent un dispositif de criblage, de préférence à tambour rotatif comprenant une grille calibrée.

12. Procédé selon l'une des revendications précédentes, **caractérisé en ce que** l'étape de nettoyage (E) des matériaux polymères est réalisée dans une ou plusieurs cuves (12, 54), en milieu liquide, de préférence sous agitation énergique, à température élevée, et avec 50 à 70 % de matériaux polymères et 30 à 50 % de liquide.

13. Procédé selon la revendication 12, **caractérisé en ce que** le milieu liquide comprend notamment de 50 à 100 % d'eau, de 0 à 20 % d'un agent nettoyant, de 0 à 30 % d'un agent d'abrasion, et/ou un agent mouillant, les pourcentages étant exprimés en poids.

14. Procédé selon la revendication 13, **caractérisé en ce que** l'agent nettoyant est de préférence de la soude, de la potasse, du carbonate de sodium, des savons ou un mélange de ceux-ci.

15. Procédé selon la revendication 13 ou 14, **caractérisé en ce que** l'agent d'abrasion est de préférence du carbonate de calcium en poudre, du talc, de la silice ou de l'alumine ou un mélange de ceux-ci.

16. Procédé selon l'une des revendications précédentes, **caractérisé en ce que** la première étape de séparation par densité (C) permet de séparer les matières de densité supérieure à 1 (9) des matières de densité inférieure ou égale à 1 (8).

17. Procédé selon l'une des revendications précédentes, **caractérisé en ce que** dans le cas des densités inférieures à 1, la densité pour la deuxième étape de séparation par densité (G) est ajustée sensiblement autour de 1.

18. Procédé selon la revendication. 16 ou 17, **caractérisé en ce que** dans le cas des densités inférieures à 1, l'on place après la deuxième étape de séparation par densité (G) une troisième étape de séparation par densité (M).

19. Procédé selon la revendication 18, **caractérisé en ce que** dans le cas des densités inférieures à 1, la densité pour la troisième étape (M) de séparation par densité est ajustée sensiblement entre 0,9 et 0,95, de façon à permettre de séparer une matière à densité inférieure (28) comprenant du polypropylène (PP), d'une autre matière à densité supérieure (29) comprenant du polyéthylène (PE).

20. Procédé selon l'une quelconque des revendications 16 à 19, **caractérisé en ce que**, dans le cas des densités supérieures à 1, la densité pour la deuxième étape (V) de séparation par densité est ajustée sensiblement à 1,05, de façon à permettre de séparer une matière à densité inférieure (47) comprenant du polystyrène (PS), d'une autre matière à densité supérieure (48) comprenant de l'acrylonitrile-butadiène-styrène (ABS).

21. Procédé selon la revendication 20, **caractérisé en ce que** dans le cas de la séparation de l'ABS, l'on prévoit une troisième étape de séparation par densité (W), dont la densité est ajustée sensiblement à 1,1 intercalée entre la deuxième étape de séparation par densité (V) et l'étape de nettoyage des matériaux polymères (E).

22. Procédé selon la revendication 21, **caractérisé en ce que** dans le cas de la séparation de l'ABS, l'on place après la troisième étape de séparation par densité (W) une quatrième étape de séparation par densité (Gₐ) dont la densité est ajustée sensiblement à 1,07.

23. Procédé selon l'une quelconque des revendications 20 à 22, **caractérisé en ce que**, dans le cas de la purification du PS (47), l'on prévoit une troisième étape de séparation par densité (G_{b}) dont la densité est ajustée sensiblement à 1,05.

24. Procédé selon l'une des revendications précédentes, **caractérisé en ce que** les étapes de séparation par densité (C, G, M, V, W) se font de préférence par flottation en milieu liquide, dont on peut contrôler et régler la densité, qui permet de séparer une matière surnageante (8, 28, 47, 58), à densité inférieure à celle du milieu liquide, d'une autre matière qui coule (9, 16, 29, 48, 51), à densité supérieure à celle du milieu liquide.

25. Procédé selon la revendication 24, **caractérisé en ce que** le milieu liquide pour les étapes de séparation par densité avec flottation dont la densité est sensiblement égale à 1 (C, G) comprend de préférence de l'eau.

26. Procédé selon la revendications 24, **caractérisé en ce que** le milieu liquide pour les étapes de séparation par densité avec flottation dont la densité est supérieure à 1 (V, W, Gₐ, G_{b}) comprend de préférence de l'eau, des argiles ou des sels, et/ou un agent mouillant.

27. Procédé selon la revendication 24, **caractérisé en ce que** le milieu liquide pour les étapes de séparation par densité avec flottation dont la densité est inférieure à 1 (G, M) comprend de préférence de l'eau et/ou du méthanol, et/ou de l'éthanol et/ou un agent mouillant.

28. Procédé selon l'une des revendications précédentes, **caractérisé en ce que** les étapes de séparation par densité (C, G, M, V, W) sont mises en oeuvre grâce à un dispositif mécanique, et de préférence grâce à une table densimétrique à secousses.

29. Procédé selon l'une des revendications précédentes, **caractérisé en ce que** les étapes de séparation par densité (C, G, M, V, W) sont mises en oeuvre grâce à un séparateur hydraulique dynamique, ou grâce à un séparateur du type cyclone et pompe.

30. Procédé selon l'une des revendications précédentes, **caractérisé en ce que** dans le cas de la purification de l'ABS (48), l'on réalise une étape supplémentaire de séparation par tri électrostatique (Z).

31. Procédé selon l'une des revendications précédentes, **caractérisé en ce que** dans le cas de la purification du PS (47), l'on réalise une étape supplémentaire de séparation par tri optique (Zₐ).

32. Procédé selon l'une des revendications précédentes, **caractérisé en ce qu'**on réalise une étape de broyage supplémentaire (D) que l'on place après l'étape de séparation mécanique par facteur de forme (B), soit après l'étape de nettoyage (E), soit après la première étape de séparation par densité (C), soit après la deuxième étape de séparation par densité (V, G) soit après la troisième étape de séparation par densité (W).

33. Procédé selon l'une des revendications précédentes, **caractérisé en ce que** l'on réalise une étape de mouillage (A), ou d'immersion, ou de trituration des matériaux avec de l'eau ou une solution alcaline, soit au tout début du procédé, soit après l'étape de broyage (D), soit avant l'une des séparations par densité (C, G, Gₐ, G_{b}, M, V, W).

34. Procédé selon l'une des revendications précédentes, **caractérisé en ce que** l'on réalise après chaque étape de séparation par densité avec flottation, dans lesquelles la densité est supérieure à 1 (V, W, Gₐ, G_{b}) une étape de rinçage, d'égouttage et de centrifugation (X, Y).

35. Procédé selon l'une des revendications précédentes, **caractérisé en ce qu'**on réalise une étape de centrifugation (H), une étape de séchage (I) pour éliminer tout liquide, et une étape de stockage (J) en silo, après la deuxième étape de séparation par densité (V, G) ou après la quatrième étape de séparation par densité (Gₐ, G_{b}).

36. Procédé selon l'une des revendications précédentes, **caractérisé en ce que** l'on réalise une étape de séparation à flux d'air (K) qui permet l'élimination de toutes les matières légères (23, 66) après la deuxième étape de séparation par densité (V, G, Gₐ, G_{b}), ou après une étape de séchage (I).

37. Procédé selon l'une des revendications précédentes, **caractérisé en ce qu'**on réalise une étape de séparation par densité (L) grâce à un dispositif mécanique de type table à secousses (24, 67) après la deuxième étape de séparation par densité (V, G, Gₐ, G_{b}) et/ou après l'étape de séparation à flux d'air (K), ou après une étape de séchage (I).

38. Procédé selon l'une des revendications précédentes, **caractérisé en ce que** l'on réalise après l'étape de nettoyage (E) une étape de rinçage et d'égouttage (F) des matériaux polymères.

39. Procédé selon l'une des revendications précédentes, **caractérisé en ce que**, si l'on césire purifier davantage du PP (28), du PE (29), de l'ABS (72), du PS (76), séparément, on centrifuge (N), on sèche (0), puis on homogénéise (P), on extrude (Q), on centrifuge (R), on calibre (S), on homogénéise (T) à nouveau et on ensache (U).

40. Procédé selon la revendication 39, **caractérisé en ce que** l'on peut placer une étape de séparation à flux d'air pour éliminer les fibres et poussières, avant l'étape d'extrusion (Q).

41. Procédé selon l'une des revendications précédentes, **caractérisé en ce qu'**il permet d'obtenir du PE (29, 31) ou du PE extrudé (44), du PP (28, 32) ou du PP extrudé (43), du PS (47, 76) ou du PS extrudé (86), de l'ABS (48, 72) ou de l'ABS extrudé (84).

42. Installation (1) destinée à la mise en oeuvre du procédé selon la revendication 1, comportant un dispositif de broyage (11, 53), au moins deux dispositifs de séparation par densité (7, 14, 27, 46, 49, 57), un dispositif de séparation mécanique par facteur de forme (6), un dispositif de nettoyage (12, 54).

43. Installation selon la revendication 42, **caractérisé en ce qu'**elle comporte en outre un dispositif de séparation à flux d'air (22, 64), un dispositif de séparation par densité à dispositif mécanique (24, 67), un dispositif de séparation électrostatique (71), un dispositif de séparation par trioptique (73), un dispositif de mouillage (3), un dispositif de rinçage et d'égouttage (13, 52, 59), un dispositif de centrifugation (18, 33, 38, 61, 79), un dispositif de séchage (19, 34, 62), un dispositif d'homogénéisation (36, 41, 77, 82), un dispositif de stockage (21, 63), un dispositif d'extrusion (37, 78), un dispositif de calibrage (39, 81) et un dispositif d'ensachage (42, 83).

## Patentansprüche

1. Verfahren zum Trennen der von Abfällen stammenden Polymermaterialien (2), einen Zerkleinerungsschritt sowie die vier folgenden Schritte umfassend, die in beliebiger Reihenfolge ausgeführt werden können:
- einen Schritt zur mechanischen Trennung mittels Formfaktor (B),
- einen Reinigungsschritt (E), und
- wenigstens zwei Schritte zur Trennung mittels Dichte (C, G, M, V, W).

2. Verfahren nach Anspruch 1, **dadurch gekennzeichnet, dass** man die genannten Schritte ausführt, indem man mit einem mechanischen Trennungsschritt mittels Formfaktor (B) beginnt, gefolgt in beliebiger Reihenfolge von einem Reinigungsschritt (E) und wenigstens zwei Trennungsschritten mittels Dichte (C, G, M, V, W).

3. Verfahren nach Anspruch 1, **dadurch gekennzeichnet, dass** man die genannten Schritte ausführt, indem man mit einem Trennungsschritt mittels Dichte (C) beginnt, gefolgt in beliebiger Reihenfolge von einem Reinigungsschritt (E), einem mechanischen Trennungsschritt mittels Formfaktor (B) und wenigstens einem Trennungsschritt mittels Dichte (G, M, V, W).

4. Verfahren nach Anspruch 1 oder 2, **dadurch gekennzeichnet, dass** man die genannten Schritte in folgender Reihenfolge ausführt: einen mecanischen Trennungsschritt mittels Formfaktor (B), gefolgt von einem ersten Trennungsschritt mittels Dichte (C) und dann einem Reinigungsschritt der Polymermaterialien (E) und einem zweiten Trennungsschritt mittels Dichte (G, M, V, W).

5. Verfahren nach Anspruch 1 oder 2, **dadurch gekennzeichnet, dass** man die genannten Schritte in folgender Reihenfolge ausführt: einen mechanischen Trennungsschritt mittels Formfaktor (B), gefolgt von einem ersten Trennungsschritt mittels Dichte (C) und dann einem zweiten Trennungsschritt mittels Dichte (G, M, V, W) und einem Reinigungsschritt der Polymermaterialien (E).

6. Verfahren nach Anspruch 1 oder 2, **dadurch gekennzeichnet, dass** man die genannten Schritte in folgender Reihenfolge ausführt: einen mechanischen Trennungsschritt mittels Formfaktor (B), gefolgt von einem Reinigungsschritt der Polymermaterialien (E), dann einem ersten Trennungsschritt mittels Dichte (C) und einem zweiten Trennungsschritt mittels Dichte (G, M, V, W).

7. Verfahren nach Anspruch 1 oder 3, **dadurch gekennzeichnet, dass** man die genannten Schritte in folgender Reihenfolge ausführt: einen ersten Trennungsschritt mittels Dichte (C), gefolgt von einem mechanischen Trennungsschritt mittels Formfaktor (B) und dann einem Reinigungsschritt der Polymermaterialien (E) und einem zweiten Trennungsschritt mittels Dichte (G, M, V, W).

8. Verfahren nach Anspruch 1 oder 3, **dadurch gekennzeichnet, dass** man die genannten Schritte in folgender Reihenfolge ausführt: einen ersten Trennungsschritt mittels Dichte (C), gefolgt von einem mechanischen Trennungsschritt mittels Formfaktor (B) und dann einem zweiten Trennungsschritt mittels Dichte (G, M, V, W) und einem Reinigungsschritt der Polymermaterialien (E).

9. Verfahren nach Anspruch 1 oder 3, **dadurch gekennzeichnet, dass** man die genannten Schritte in folgender Reihenfolge ausführt: einen ersten Trennungsschritt mittels Dichte (C), gefolgt von einem Reinigungsschritt der Polymermaterialien (E) und dann einem mechanischen Trennungsschritt mittels Formfaktor (B) und einem zweiten Trennungsschritt mittels Dichte (G, M, V, W).

10. Verfahren nach einem der vorangehenden Ansprüche, **dadurch gekennzeichnet, dass** der mechanische Trennungsschritt mittels Formfaktor (B) durch Siebeinrichtungen (6) erfolgt, die ermöglichen, alle Materialien (4) zu eliminieren, deren Abmessungen zu groß sind.

11. Verfahren nach Anspruch 10, **dadurch gekennzeichnet, dass** die Siebeinrichtungen (6) eine Siebvorrichtung vorzugsweise mit Drehtrommel umfassen, die ein kalibriertes Gitter hat.

12. Verfahren nach einem der vorangehenden Ansprüche, **dadurch gekennzeichnet, dass** der Reinigungsschritt (E) der Polymermaterialien in einem oder mehreren Behältern (12, 54) ausgeführt wird, in einem flüssigen Medium, vorzugsweise bei kräftigem Umrühren, hoher Temperatur und 50 bis 70% Polymermaterialen und 30 bis 50% Flüssigkeit.

13. Verfahren nach Anspruch 12, **dadurch gekennzeichnet, dass** das flüssige Medium nähmlich 50 bis 100% Wasser, 0 bis 20% Reinigungsmittel, 0 bis 30% Abrasionsmittel und/oder ein Benetzungsmittel umfasst, wobei die Prozentangaben Gewichtsprozente ausdrücken.

14. Verfahren nach Anspruch 13, **dadurch gekennzeichnet, dass** das Reinigungsmittel vorzugsweise Soda, Kalium, Natriumcarbonat, Seifen oder eine Mischung von diesen ist.

15. Verfahren nach Anspruch 13 oder 14, **dadurch gekennzeichnet, dass** das Abrasionsmittel vorzugsweise pulverförmiges Calciumcarbonat, Talk, Siliciumdioxid oder Alumimiumoxid oder eine Mischung von diesen ist.

16. Verfahren nach einem der vorangehenden Ansprüche, **dadurch gekennzeichnet, dass** der erste Trennungsschritt mittels Dichte (C) ermöglicht, die Materialien der Dichte größer als 1 (9) von den Materialien der Dichte niedriger als 1 oder gleich 1 (8) zu trennen.

17. Verfahren nach einem der vorangehenden Ansprüche, **dadurch gekennzeichnet, dass** in dem Fall der Dichten niedriger als 1, wird die Dichte für den zweiten Dichte-Trennungsschritt (G) in beachtlicher Weise um 1 herum eingestellt.

18. Verfahren nach Anspruch 16 oder 17, **dadurch gekennzeichnet, dass** man in dem Fall der Dichten niedriger als 1 nach dem zweiten Dichte-Trennungsschritt (G) einen dritten Dichte-Trennungsschritt (M) ausführt.

19. Verfahren nach Anspruch 18, **dadurch gekennzeichnet, dass** in dem Fall der Dichten niedriger als 1 wird die Dichte für den dritten Dichte-Trennungsschritt (M) in beachtlicher Weise zwischen 0,9 und 0,95 eingestellt, um die Trennung eines Polypropylen (PP) umfassenden Materials mit niedrigerer Dichte (28) von einem anderen, Polyethylen (PE) umfassenden Material mit höherer Dichte (29) zu ermöglichen.

20. Verfahren nach einem der Ansprüche 16 bis 19, **dadurch gekennzeichnet, dass** in dem Fall der Dichten höherer als 1 wird die Dichte für den zweiten Dichte-Trennungsschritt (V) in beachtlicher Weise auf 1,05 eingestellt, um die Trennung eines Polystyrol (PS) umfassenden Materials mit niedrigerer Dichte (47) von einem anderen, Acrylnitril-Butadien-Styrol (ABS) umfassenden Material mit höherer Dichte (48) zu ermöglichen.

21. Verfahren nach Anspruch 20, **dadurch gekennzeichnet, dass** man in dem Fall der Trennung des ABS einen dritten Dichte-Trennungsschritt (W) vorsieht, dessen Dichte in beachtlicher Weise auf 1,1 eingestellt wird und der eingefügt wird zwischen den zweiten Dichte-Trennungsschritt (V) und den Reinigungsschritt der Polymermaterialien (E).

22. Verfahren nach Anspruch 21, **dadurch gekennzeichnet, dass** man in dem Fall der Trennung des ABS nach dem dritten Dichte-Trennungsschritt (W) einen vierten Dichte-Trennungsschritt (Gₐ) einfügt, dessen Dichte in beachtlicher Weise auf 1,07 eingestellt wird.

23. Verfahren nach einem der Ansprüche 20 bis 22, **dadurch gekennzeichnet, dass** man in dem Fall der Reinigung des PS (47) einen dritten Dichte-Trennungsschritt (G_{b}) vorsieht, dessen Dichte in beachtlicher Weise auf 1,05 eingestellt wird.

24. Verfahren nach einem der vorangehenden Ansprüche, **dadurch gekennzeichnet, dass** die Dichte-Trennungsschritte (C, G, M, V, W) vorzugsweise durch Flotation in einem flüssigen Medium erfolgen, dessen Dichte man kontrollieren und regeln kann, was ermöglicht, ein aufschwimmendes Material (8, 28, 47, 58) mit niedrigerer Dichte als der des flüssigen Mediums zu trennen von einem anderen, absinkenden Material (9, 16, 29, 48, 51) mit höherer Dichte als der des flüssigen Mediums.

25. Verfahren nach Anspruch 24, **dadurch gekennzeichnet, dass** das flüssige Medium für die Dichte-Trennungsschritte mittels Flotation, dessen Dichte in beachtlicher Weise gleich 1 ist (C, G), vorzugsweise Wasser umfasst.

26. Verfahren nach Anspruch 24, **dadurch gekennzeichnet, dass** das flüssige Medium für die Dichte-Trennungsschritte mittels Flotation, dessen Dichte höher ist als 1 (V, W, Gₐ, G_{b}), vorzugsweise Wasser, Tone oder Salze und/oder ein Benetzungsmittel umfasst.

27. Verfahren nach Anspruch 24, **dadurch gekennzeichnet, dass** das flüssige Medium für die Dichte-Trennungsschritte, dessen Dichte niedriger ist als 1 (G, M), vorzugsweise Wasser und/oder Methanol, und/oder Ethanol und/oder ein Benetzungsmittel umfasst.

28. Verfahren nach einem der vorangehenden Ansprüche, **dadurch gekennzeichnet, dass** die Dichte-Trennungsschritte (C, G, M, V, W) mit Hilfe einer mechanischen Vorrichtung und vorzugsweise mit Hilfe einer densimetrischen Schüttelvorrichtung ausgeführt werden.

29. Verfahren nach einem der vorangehenden Ansprüche, **dadurch gekennzeichnet, dass** die Dichte-Trennungsschritte (C, G, M,V, W) mit Hilfe einer dynamisch-hydraulischen Trennvorrichtung oder mit Hilfe einer Trennvorrichtung des Typs Zyklon und Pumpe ausgeführt werden.

30. Verfahren nach einem der vorangehenden Ansprüche, **dadurch gekennzeichnet, dass** man in dem Fall der Reinigung des ABS (48) einen zusätzlichen Trennungsschritt mittels elektrostatischer Sortierung (Z) ausführt.

31. Verfahren nach einem der vorangehenden Ansprüche, **dadurch gekennzeichnet, dass** man in dem Fall der Reinigung des PS (47) einen zusätzlichen Trennungsschritt mittels optischer Sortierung (Zₐ) ausführt.

32. Verfahren nach einem der vorangehenden Ansprüche, **dadurch gekennzeichnet, dass** man einen zusätzlichen Zerkleinerungsschritt (D) ausführt, den man entweder nach dem mechanischen Formfaktor-Trennungsschritt (B) oder nach dem Reinigungsschritt (E) oder nach dem ersten Dichte-Trennungsschritt (C) oder nach dem zweiten Dichte-Trennungsschritt (V, G) oder nach dem dritten Dichte-Trennungsschritt (W) ausführt.

33. Verfahren nach einem der vorangehenden Ansprüche, **dadurch gekennzeichnet, dass** man einen Schritt des Besprengens bzw. Nassmachens (A) oder des Eintauchens oder des Zerkleinerns der Materialien mit Wasser oder einen alkalihaltigen Lösung ausführt, entweder ganz am Anfang des Verfahrens oder nach dem Zerkleinerungsschritt (D) oder vor einem der Dichte-Trennungsschritte (C, G, Gₐ, G_{b}, M, V, W).

34. Verfahren nach einem der vorangehenden Ansprüche, **dadurch gekennzeichnet, dass** man nach jedem Dichte-Trennungsschritt mittels Flotation, wenn die Dichte höher als 1 ist (V, W, Gₐ, G_{b}), einen Spül-, Abtropf- und Schleuderschritt (X, Y) durchführt.

35. Verfahren nach einem der vorangehenden Ansprüche, **dadurch gekennzeichnet, dass** man einen Schleuderschritt (H), einen Trocknungsschritt (I) zur Beseitigung aller Flüssigkeit und einen Schritt zur Speicherung (J) im Silo ausführt, nach dem zweiten Dichte-Trennungsschritt (V, G) oder nach dem vierten Dichte-Trennungsschritt (Gₐ, G_{b}).

36. Verfahren nach einem der vorangehenden Ansprüche, **dadurch gekennzeichnet, dass** man einen Luftstrom-Trennungsschritt (K) ausführt, der die Beseitigung aller leichten Materialien (23, 66) nach dem zweiten Dichte-Trennungsschritt (V, G, Gₐ, G_{b}) oder nach einem Trocknungsschritt (I) ermöglicht.

37. Verfahren nach einem der vorangehenden Ansprüche, **dadurch gekennzeichnet, dass** man nach dem zweiten Dichte-Trennungsschritt (V,G, Gₐ, G_{b}) und/oder nach dem Luftstrom-Trennungsschritt (K) oder nach einem Trocknungsschritt (I) mit Hilfe einer mechanischen Vorrichtung des Typs Schütteltisch (24, 67) einen Dichte-Trennungsschritt (L) ausführt.

38. Verfahren nach einem der vorangehenden Ansprüche, **dadurch gekennzeichnet, dass** man nach dem Reinigungsschritt (E) einen Spül- und Abtropfschritt (F) der Polymermaterialien durchführt.

39. Verfahren nach einem der vorangehenden Ansprüche, **dadurch gekennzeichnet, dass** man, wenn eine weitere, getrennte Reinigung des PP (28), des PE (29), des ABS (72), des PS (76) gewünscht wird, wird das Polymaterial geschleudert (N), getrocknet (O), dann homogenisiert (P), extrudiert (Q), geschleudert (R), kalibriert (S), erneut homogenisiert (T) und eingesackt (U).

40. Verfahren nach Anspruch 39, **dadurch gekennzeichnet, dass** man einen Luftstrom-Trennungsschritt zur Beseitigung der Fasern und Stäube vor dem Extrusionsschritt (Q) einfügen kann.

41. Verfahren nach einem der vorangehenden Ansprüche, **dadurch gekennzeichnet, dass** es ermöglicht, PE (29, 31) oder extrudiertes PE (44), PP (28, 32) oder extrudiertes PP (43), PS (47, 76) oder extrudiertes PS (86) und ABS (48, 72) oder extrudiertes ABS (84) zu gewinnen.

42. Anlage (1) zur Anwendung des Verfahrens nach Anspruch 1, die eine Zerkleinerungsvorrichtung (11, 53), wenigstens zwei Trennungsvorrichtungen mittels Dichte (7, 14, 27, 46, 49, 57), eine mechanische Trennungsvorrichtung mittels Formfaktor (6) und eine Reinigungsvorrichtung (12, 54) umfasst.

43. Anlage nach Anspruch 42, **dadurch gekennzeichnet, dass** sie außerdem eine Luftstrom-Trennvorrichtung (22, 64), eine Vorrichtung zur Trennung mittels Dichte durch eine mechanischen Vorrichtung (24, 67), eine elektrostatische Trennvorrichtung (71), eine Trennvorrichtung mittels optischer Sortierung (73), eine Besprengungsvorrichtung (3), eine Spül- und Abtropfvorrichtung (13, 52, 59), eine Schleudervorrichtung (18, 33, 38, 61, 79), eine Trocknungsvorrichtung (19, 34, 62), eine Homogenisierungsvorrichtung (36, 41, 77, 82), eine Speichervorrichtung (21, 63), eine Extrusionsvorrichtung (37, 78), eine Kalibriervorrichtung (39, 81) und eine Einsackvorrichtung (42, 83) umfasst.

## Claims

1. Method for separating polymer materials (2) originating from waste, comprising a grinding step, as well as the following four steps which can be carried out in any order:
- a form-factor mechanical separation step (B),
- a cleaning step (E), and
- at least two density separation steps (C, G, M, V, W).

2. Method according to Claim 1, **characterised in that** the said steps are carried out by starting with a form-factor mechanical separation step (B), followed in any order by a cleaning step (E) and at least two density separation steps (C, G, M, V, W).

3. Method according to Claim 1, **characterised in that** the said steps are carried out by starting with a density separation step (C), followed in any order by a cleaning step (E), by a form-factor mechanical separation step (B) and by at least one density separation step (G, M, V, W).

4. Method according to Claim 1 or 2, **characterised in that** the said steps are carried out in the following order: a form-factor mechanical separation step (B) is followed by a first density separation step (C), then by a cleaning step (E) of the polymer materials and by a second density separation step (G, M, V, W).

5. Method according to Claim 1 or 2, **characterised in that** the said steps are carried out in the following order: a form-factor mechanical separation step (B) is followed by a first density separation step (C), then by a second density separation step (G, M, V, W) and by a cleaning step (E) of the polymer materials.

6. Method according to Claim 1 or 2, **characterised in that** the said steps are carried out in the following order: a form-factor mechanical separation step (B) is followed by a cleaning step (E) of the polymer materials, then by a first density separation step (C) and by a second density separation step (G, M, V, W).

7. Method according to Claim 1 or 3, **characterised in that** the said steps are carried out in the following order: a first density separation step (C) is followed by a form-factor mechanical separation step (B), then by a cleaning step (E) of the polymer materials and by a second density separation step (G, M, V, W).

8. Method according to Claim 1 or 3, **characterised in that** the said steps are carried out in the following order: a first density separation step (C) is followed by a form-factor mechanical separation step (B), then by a second density separation step (G, M, V, W) and by a cleaning step (E) of the polymer materials.

9. Method according to Claim 1 or 3, **characterised in that** the said steps are carried out in the following order: a first density separation step (C) is followed by a cleaning step (E) of the polymer materials, then by a form-factor mechanical separation (B) and by a second density separation (G, M, V, W).

10. Method according to one of the preceding Claims, **characterised in that** the form-factor mechanical separation step (B) is performed with screening means (6) which allow the removal of all the materials (4) which are too large.

11. Method according to Claim 10, **characterised in that** the screening means (6) comprise a screening device, preferably a rotating drum comprising a calibrated grid.

12. Method according to one of the preceding claims, **characterised in that** the cleaning step (E) of the polymer materials is achieved in one or more tanks (12, 54), in liquid medium, preferably with vigorous stirring, at elevated temperature, and with 50 to 70% of polymer materials and 30 to 50% of liquid.

13. Method according to Claim 12, **characterised in that** the liquid medium comprises, in particular, from 50 to 100% of water, from 0 to 20% of a cleaning agent, from 0 to 30% of an abrasive agent, and/or a wetting agent, the percentages being weight percentages.

14. Method according to Claim 13, **characterised in that** the cleaning agent is preferably sodium hydroxide, potassium hydroxide, sodium carbonate, soaps or a mixture thereof.

15. Method according to Claim 13 or 14, **characterised in that** the abrasive agent is preferably calcium carbonate powder, talc, silica or alumina, or a mixture thereof.

16. Method according to one of the preceding claims, **characterised in that** the first density separation step (C) allows the materials with a density of greater than 1 (9) to be separated from the materials with a density of less than or equal to 1 (8).

17. Method according to one of the preceding claims, **characterised in that**, in case of densities of less than 1, the density for the second density separation step (G) is more or less adjusted to about 1.

18. Method according to Claim 16 or 17, **characterised. in that**, in case of densities of less than 1, a third density separation step (M) is placed after the second density separation step (G).

19. Method according to Claim 18, **characterised in that**, in case of densities of less than 1, the density for the third density separation step (M) is more or less adjusted between 0.9 and 0.95, so as to be able to separate a material of lower density (28), comprising polypropylene (PP), from another material of higher density (29), comprising polyethylene (PE).

20. Method according to any one of Claims 16 to 19, **characterised in that**, in case of densities of greater than 1, the density for the second density separation step (V) is more or less adjusted to 1.05, so as to allow the separation of a material of lower density (47), comprising polystyrene (PS), from another material of higher density (48), comprising acrylonitrile-butadiene-styrene (ABS).

21. Method according to Claim 20, **characterised in that**, in case of the separation of ABS, a third density separation step (W) in which the density is more or less adjusted to 1.1, inserted between the second density separation step (V) and the cleaning step (E) of the polymer materials, is provided.

22. Method according to Claim 21, **characterised in that**, in case of separation of the ABS, a fourth density separation step (Gₐ), in which the density is more or less adjusted to 1.07, is placed after the third density separation step (W).

23. Method according to any one of Claims 20 to 22, **characterised in that**, in case of the purification of PS (47), a third density separation step (G_{b}), in which the density is more or less adjusted to 1.05, is provided.

24. Method according to one of the preceding claims, **characterised in that** the density separation steps (C, G, M, V, W) preferably take place by flotation in liquid medium, the density of which can be checked and controlled, which allows a supernatant material (8, 28, 47, 58), with a density less than that of the liquid medium, to be separated from another material which flows (9, 16, 29, 48, 51), with a density greater than that of the liquid medium.

25. Method according to Claim 24, **characterised in that** the liquid medium for the density separation steps with flotation in which the density is more or less equal to 1 (C, G) preferably comprises water.

26. Method according to Claim 24, **characterised in that** the liquid medium for the density separation steps with flotation, in which the density is greater than 1 (V, W, Gₐ, G_{b}), preferably comprises water, clays or salts, and/or a wetting agent.

27. Method according to Claim 24, **characterised in that** the liquid medium for the density separation steps with flotation, in which the density is less than 1 (G, M), preferably comprises water and/or methanol, and/or ethanol and/or a wetting agent.

28. Method according to one of the preceding claims, **characterised in that** the density separation steps (C, G, M, V, W) are carried out by means of a mechanical device, and preferably by means of a densimetric shaking table.

29. Method according to one of the preceding claims, **characterised in that** the density separation steps (C, G, M, V, W) are carried out by means of a dynamic hydraulic separator, or by means of a separator of the cyclone and pump type.

30. Method according to one of the preceding claims, **characterised in that**, in case of purification of the ABS (48), an additional step of separation by electrostatic sorting (Z) is carried out.

31. Method according to one of the preceding claims, **characterised in that**, in case of purification of the PS (47), an additional step of separation by optical sorting (Zₐ) is carried out.

32. Method according to one of the preceding claims, **characterised in that** an additional grinding step (D) is carried out, which is placed after the form-factor mechanical separation step (B), or after the cleaning step (E), or after the first density separation step (C), or after the second density separation step (V, G) or after the third density separation step (W).

33. Method according to one of the preceding claims, **characterised in that** a step of wetting (A), or of immersion, or of trituration of the materials with water or an alkaline solution is carried out, either at the very start of the process, or after the grinding step (D) or before one of the density separation steps (C, G, Gₐ, G_{b}, M, V, W).

34. Method according to one of the preceding claims, **characterised in that**, after each density separation step with flotation, in which the density is greater than 1 (V, W, Gₐ, G_{b}), a step of rinsing, dripping and centrifugation (X, Y) is carried out.

35. Method according to one of the preceding claims, **characterised in that** a centrifugation step (H), a drying step (I) to remove any liquid, and a step of storage (J) in a silo, are carried out after the second density separation step (V, G) or after the fourth density separation step (Gₐ, G_{b}).

36. Method according to one of the preceding claims, **characterised in that** an airflow separation step (K) which allows the removal of all of the light materials (23, 66) is carried out after the second density separation step (V, G, Gₐ, G_{b}) or after a drying step (I).

37. Method according to one of the preceding claims, **characterised in that** a density separation step (L) is carried out by means of a mechanical device of vibrating table type (24, 67) after the second density separation step (V, G, Gₐ, G_{b}) and/or after the airflow separation step (K), or after a drying step (I).

38. Method according to one of the preceding claims, **characterised in that** a step of rinsing and dripping (F) of the polymer materials is carried out after the cleaning step (E).

39. Method according to one of the preceding claims, **characterised in that**, if it is desired to further purify PP (28), PE (29), ABS (72), PS (76), separately, the polymer material is centrifuged (N), dried (O), and then homogenised (P), extruded (Q), centrifuged (R), graded (S), homogenised again (T) and bagged (U).

40. Method according to Claim 39, **characterised in that** an airflow separation step to remove the fibres and dusts can be placed before the extrusion step (Q).

41. Method according to one of the preceding claims, **characterised in that** it makes it possible to obtain PE (29, 31) or extruded PE (44), PP (28, 32) or extruded PP (43), PS (47, 76) or extruded PS (86), ABS (48, 72) or extruded ABS (84).

42. Plant (1) designed to carry out the process according to claim 1, including a grinding device (11, 53), at least two density separation devices (7, 14, 27, 46, 49, 57), a form factor-mechanical separation device (6), a cleaning device (12, 54).

43. Plant according to claim 42, **characterized in that** it further includes the devices for air-flow separation (22, 64), for density separation with a mechanical device (24, 67), for electrostatic separation (71), for separation by optical sorting (73), for wetting (3), for rinsing and dripping (13, 52, 59), for centrifugation (18, 33, 38, 61, 79), for drying (19, 34, 62), for homogenisation (36, 41, 77, 82), for storage (21, 63), for extrusion (37, 78), for grading (39, 81) and for bagging (42, 83).
